# EUROPEAN PATENT APPLICATION

(11) **EP 3 945 737 A1**
(43) Date of publication of application: **02.02.2022**
(21) Application number: 21187980.4
(22) Date of filing: 27.07.2021
(51) Int. Cl.: H04W 4/44, G05D 1/02, G08G 1/01, G08G 1/0967, G08G 1/0968, G08G 1/16

(54) **VEHICLE MANAGEMENT SYSTEM, MANAGEMENT METHOD, AND PROGRAM**

(30) Priority: 28.07.2020 JP 2020127647
(71) Applicant: TOYOTA JIDOSHA KABUSHIKI KAISHA, Toyota-shi, Aichi-ken 471-8571 (JP)
(72) Inventor: ITOH, Masayuki, Aichi-ken, 471-8571 (JP)
(74) Representative: D Young & Co LLP

(57) **Abstract**

An automated driving vehicle management apparatus according to an embodiment is a vehicle management system (100) that manages a vehicle traveling along a traveling route, the vehicle management system (100) including: a map information acquisition unit (201) that acquires map information including a road on which a vehicle (301) travels; a sensor (501) that detects environmental information about another vehicle or a passerby, the sensor (501) being disposed in a traveling environment including the road and an area around the road; a generation unit (203) that generates, based on the map information and the environmental information, traveling information about a traveling speed of the vehicle (301) on the traveling route or about whether or not the vehicle (301) can pass through the traveling route; and a communication unit (204) that transmits the traveling information to the vehicle (301).

## Description

### BACKGROUND

The present disclosure relates to a vehicle management system, a management method, and a program.

Patent Literature 1 (Japanese Unexamined Patent Application Publication No. 2018-112984) discloses an electronic apparatus and a driving support system capable of accurately determining a stop position at an intersection. Patent Literature 2 (Japanese Unexamined Patent Application Publication No. 2019-43396) discloses a method for generating a target traveling route by detecting an obstacle present in the area around a subject vehicle.

### SUMMARY

In such techniques, it is desirable to appropriately control a vehicle.

The present disclosure has been made to solve the aforementioned problem, and it provides a vehicle management system, a management method, and a program that are capable of appropriately managing a vehicle.

A first exemplary aspect is a vehicle management system configured to manage a vehicle that travels along a traveling route, the vehicle management system including: a map information acquisition unit configured to acquire map information including a road on which the vehicle travels; a sensor configured to detect environmental information about another vehicle or a passerby, the sensor being disposed in a traveling environment including the road and an area around the road; a generation unit configured to generate, based on the map information and the environmental information, traveling information about a traveling speed of the vehicle on the traveling route or about whether or not the vehicle can pass through the traveling route; and a communication unit configured to transmit the traveling information to the vehicle.

In the aforementioned vehicle management system, the vehicle may be an automated driving vehicle, the communication unit may transmit the traveling information about the traveling route to the vehicle, and the vehicle may travel on the traveling route in accordance with the traveling information.

In the aforementioned vehicle management system, the traveling route may include a plurality of nodes that are associated with coordinates of the map information and a link that connects the nodes to each other, the node may be associated with passage feasibility information indicating whether or not the node can be passed through, and the link may be associated with the traveling speed.

In the aforementioned vehicle management system, the generation unit may predict a behavior of the other vehicle or the passerby based on the environmental information, and generate the traveling information based on a result of the prediction.

In the aforementioned vehicle management system, the sensor may detect an actual speed of the vehicle, and when the actual speed exceeds the traveling speed of the traveling information, the communication unit may transmit warning information to the vehicle.

In the aforementioned vehicle management system, a warning may be issued to a driver of the other vehicle or the passerby in accordance with the traveling information.

Another exemplary aspect is a vehicle management method for managing a vehicle that travels along a traveling route, the vehicle management method including: acquiring map information including a road on which the vehicle travels; detecting environmental information about another vehicle or a passerby by a sensor that is disposed in a traveling environment including the road and an area around the road; generating, based on the map information and the environmental information, traveling information about a traveling speed of the vehicle on the traveling route or about whether or not the vehicle can pass through the traveling route; and transmitting the traveling information to the vehicle.

In the aforementioned vehicle management method, the vehicle may be an automated driving vehicle, the traveling information about the traveling route may be transmitted to the vehicle, and the vehicle may travel on the traveling route in accordance with the traveling information.

In the aforementioned vehicle management method, the traveling route may include a plurality of nodes that are associated with coordinates of the map information and a link that connects the nodes to each other, the node may be associated with passage feasibility information indicating whether or not the node can be passed through, and the link may be associated with the traveling speed.

In the aforementioned vehicle management method, a behavior of the other vehicle or the passerby may be predicted based on the environmental information, and the traveling information may be generated based on a result of the prediction.

In the aforementioned vehicle management method, the sensor may detect an actual speed of the vehicle, and when the actual speed exceeds the traveling speed of the traveling information, warning information may be transmitted to the vehicle.

In the aforementioned vehicle management method, a warning may be issued to a driver of the other vehicle or the passerby in accordance with the traveling information.

Another exemplary aspect is a program for causing a computer to perform the aforementioned vehicle management method.

The present disclosure provides a vehicle management system, a management method, and a program that are capable of appropriately managing a vehicle.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram showing a vehicle management system according to an embodiment;
Fig. 2 is a diagram for explaining a traveling environment and its monitoring status;
Fig. 3 is a diagram for explaining a lane and a traveling route;
Fig. 4 is a diagram for explaining a specific example 1 of traveling information;
Fig. 5 is a diagram for explaining a specific example 2 of traveling information;
Fig. 6 is a diagram for explaining a specific example 3 of traveling information;
Fig. 7 is a diagram for explaining a specific example 4 of traveling information;
Fig. 8 is a diagram for explaining a specific example 5 of traveling information;
Fig. 9 is a diagram for explaining a specific example 6 of traveling information;
Fig. 10 is a diagram for explaining that an overtaking trajectory is provided in the specific example 6 of traveling information;
Fig. 11 is a flowchart showing a vehicle management method according to the embodiment; and
Fig. 12 is a block diagram showing a control system of a vehicle.

### DESCRIPTION OF EMBODIMENTS

Hereinafter, although the present disclosure will be described with reference to an embodiment of the present disclosure, the present disclosure according to claims is not limited to the following embodiment. Further, all the components described in the following embodiment are not necessarily essential as means for solving problems.

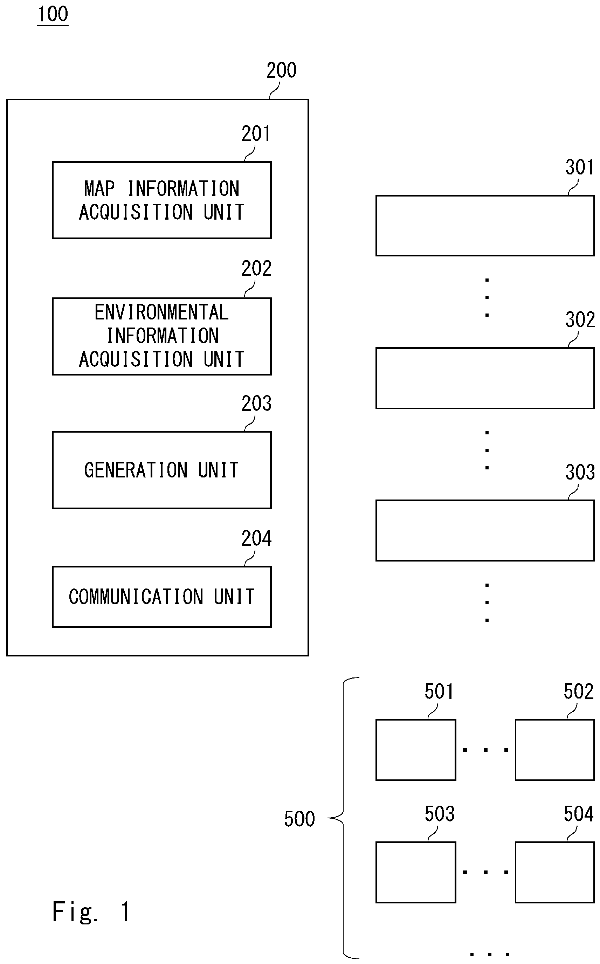

A vehicle management system (hereinafter also simply referred to as a management system), a vehicle management apparatus (hereinafter also simply referred to as a management apparatus), and an automated driving vehicle (hereinafter also simply referred to as a vehicle) according to the embodiment will be described below with reference to the drawings. Fig. 1 is a block diagram showing a configuration of a management system 100.

The management system 100 includes a management apparatus 200, one or a plurality of vehicles 301 to 303, and a plurality of sensors 501 to 504. Although each of the vehicles 301 to 303 will be described as being an automated driving vehicle, each of them may instead be a non-automated driving vehicle. Note that when the plurality of sensors 501 to 504 are not specifically distinguished from each other, they are collectively referred to as a sensor group 500.

The vehicles 301 to 303 are automated driving vehicles in which a passenger rides. That is, when a passenger or the like inputs a destination, the vehicles 301 to 303 perform automated driving to the destination. In this way, it is possible to transport a passenger to the destination. As a matter of course, each of the vehicles 301 to 303 may be an automated driving vehicle that conveys loads. That is, the vehicles 301 to 303 may be any vehicles that convey people or objects. Each of the vehicles 301 to 303 includes a control unit for performing automated driving. The control unit performs a steering operation, and an accelerating and braking operation.

As a matter of course, at least some of the vehicles 301 to 303 may be manual driving vehicles (non-automated driving vehicles). For example, the vehicles 301 and 302 may be automated driving vehicles and the vehicle 303 may be a manual driving vehicle. The vehicles 301 to 303 may be bicycles, electric bicycles, motorcycles, manual driving vehicles (non-automated driving vehicles), various types of mobility means, trucks, buses, robots, wheelchairs, and the like. The number and the type of vehicles in the management system 100 are not limited to particular ones.

Each of the vehicles 301 to 303 is controlled by automated driving so that each of them travels along a traveling route from a starting place (or its current position) to a destination. The traveling route is generated by a route search from the starting place to the destination. The route search may be performed by the vehicle 301 or by the management apparatus 200.

The level of automated driving performed by each of the vehicles 301 to 303 is not limited to a particular level. For example, when the level of automated driving is a level 2, the control unit supports both the accelerating and braking operation and the steering operation. When the level of automated driving is a level 3, at a specific place, the control unit automatically performs both the accelerating and braking operation and the steering operation, and a driver performs the same in the event of an emergency. When the level of automated driving is a level 4, the control unit automatically performs both the accelerating and braking operation and the steering operation at a specific place. When the level of automated driving is a level 5, the control unit automatically performs both the accelerating and braking operation and the steering operation without limitation as to a place. It is desirable that the level of automated driving performed by each of the vehicles 301 to 303 be 2 or higher, or 3 or higher. The level of automated driving performed by each of the vehicles 301 to 303 may be 4 or 5. Further, the levels of automated driving of the vehicles 301 to 303 may be different from one another.

The management apparatus 200 is, for example, an information processing apparatus such as a server apparatus. The management apparatus 200 includes a processor, a memory, and the like. The management apparatus 200 stores a management program for managing automated driving performed by the vehicle in the memory. The management apparatus 200 executes the management program, thereby managing automated driving performed by the vehicle. Note that the management apparatus 200 is not limited to a physically single apparatus. For example, a method for managing automated driving vehicles may be achieved by a plurality of information processing apparatuses connected to a network performing distributed processing.

The management apparatus 200 includes a map information acquisition unit 201, an environmental information acquisition unit 202, a generation unit 203, and a communication unit 204. The map information acquisition unit 201 includes a memory or the like, and stores map information of a traveling area where the vehicle travels. The map information includes information about roads, structures, facilities, and the like. For example, the map information includes information about the position, the width, the number of lanes, the shape, the direction, and the like of each road. Further, the map information includes information about the position, the shape, the size, and the like of the structures, the facilities, and the like. Position information of each of the roads, the structures, and the like is indicated by coordinates such as the latitude and the longitude, and the position information may further include altitude information. Further, the map information may be general-purpose data used for, for example, a navigation system. The management apparatus 200 can display a map corresponding to the map information. Further, the map information may include information about nodes and links described later.

The traveling area is an area in which the management apparatus 200 manages traveling by automated driving. The traveling area includes a plurality of roads. In order to make explanations simple, it is assumed here that the vehicles traveling in the traveling area are only automated driving vehicles. The traveling area is an area designed on the assumption that, like in a smart city, automated driving vehicles travel therein. As a matter of course, automated driving vehicles and manual driving vehicles may travel in the traveling area. That is, some of the vehicles traveling in the traveling area may be manual driving vehicles operated by a driver.

The environmental information acquisition unit 202 acquires environmental information detected by the sensor group 500. Each of the sensors constituting the sensor group 500 is disposed in a traveling environment including a road or the area around the road. The traveling environment includes an intersection, and the like. For example, the sensor group 500 is attached to a traffic light, a streetlight, and a traffic sign installed along a road, and installation apparatuses thereof. Alternatively, the sensor group 500 may be provided in a building, a utility pole, and a pedestrian bridge located along a road. Further, the sensors are not limited to being provided on the roof or the external walls of a building, and may instead be provided indoors. The places where the sensors are installed are not limited to the above examples.

The sensors constituting the sensor group 500 are LIDARs (Light Detection and Ranging, Laser Imaging Detection and Ranging) for detecting a distance or a direction to an object to be detected or millimeter-wave radars. Alternatively, the sensors constituting the sensor group 500 may be cameras or the like. It should be noted that an object to be detected is a traffic participant such as a vehicle and a passerby. Each of the sensors constituting the sensor group 500 monitors the traveling environment. That is, the sensor group 500 detects movement of the traffic participant in the traveling environment.

Specifically, the sensor group 500 detects environmental information about a vehicle other than the subject vehicle or about a passerby. The environmental information includes, for example, a position of the other vehicle and a physical quantity thereof such as a velocity vector. Further, the environmental information includes, for example, a position of the passerby and a physical quantity thereof such as a velocity vector.

Further, it is desirable that the plurality of sensors 501 to 504 be disposed in the vicinity of an intersection. By disposing the plurality of sensors 504 in the vicinity of an intersection, it is possible to monitor the intersection without there being any blind spot. For example, the plurality of sensors 501 to 504 monitor the intersection from directions and heights different from each other. For example, the sensor 501 monitors the intersection in one direction, and the sensor 502 monitors the intersection from another direction. Further, the sensors 501 to 504 of different types are used in combination, to thereby specify the position of a traffic participant in the traveling environment. For example, the sensor 501 may be a LIDAR, the sensor 502 may be a camera, and the sensor 503 may be a millimeter-wave radar. The sensors 501 to 503 of different types are disposed in the area around one intersection so that they monitor the one intersection.

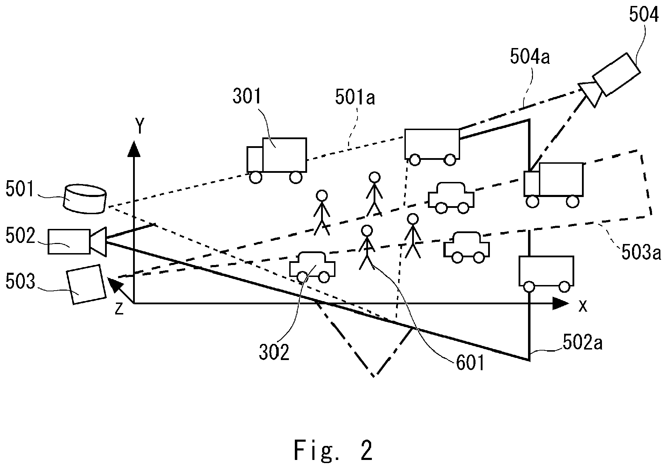

Fig. 2 is a schematic diagram for explaining a traveling environment and sensors provided in the traveling environment. Here, an XYZ three-dimensional orthogonal coordinate system is shown. The Z direction is the vertical up/down direction, and the XY plane is the horizontal plane. For example, the X direction is the north-south direction, and the Y direction is the east-west direction. The X coordinate indicates latitude, the Y coordinate indicates longitude, and the Z coordinate indicates altitude. Therefore, the position of a traffic participant can be specified by the XYZ coordinates. For example, the XYZ coordinates correspond to the coordinates in map information.

Fig. 2 shows an example in which the sensors 501 to 504 are provided. The sensor 501 is a LIDAR, the sensor 502 is a camera, the sensor 503 is a millimeter-wave radar, and the sensor 504 is a camera. The sensors 501 to 504 are disposed at different positions. The areas monitored by the respective sensors 501 to 504 partially overlap one another.

A sensing area of the sensor 501 is defined as a sensing area 501a. A sensing area of the sensor 502 is defined as a sensing area 502a. A sensing area of the sensor 503 is defined as a sensing area 503a. A sensing area of the sensor 504 is defined as a sensing area 504a.

The sensors 501 to 504 are disposed so that the sensing areas 501a to 504a partially overlap one another. Thus, it is possible to monitor a traveling environment without there being any blind spot. For example, in a case in which an intersections is monitored, when a traffic participant passes through the vicinity of one sensor 501, sensing of the sensor 501 is restricted. Specifically, when the sensor 501 is a LIDAR, the light from the sensor 501 is blocked by the traffic participant. In this case, part of the sensing area 501a is restricted, and thus the sensor 501 cannot monitor the side of the sensing area 501a located at a position away from the traffic participant. Even when the sensing area 501a of the sensor 501 is restricted, another sensor 502 covers the restricted area. Therefore, the sensors 501 to 504 can monitor a traveling environment such as an intersection without there being any blind spot.

It is desirable that at least one of the sensors 501 to 504 be disposed at positions higher than those of the vehicles 301 to 303. By doing so, it is possible to prevent a blind spot of the sensor from being generated by the vehicle or the like acting as an obstacle. The sensor group 500 can be provided, for example, on a pole of a traffic light, a traffic sign, and a street lamp. Alternatively, the sensor group 500 may be installed on a pedestrian bridge or the like. By doing so, it is possible to prevent a blind spot from being generated, and thus it is possible to more accurately detect a traffic participant.

The sensor group 500 transmits a result of detection as environmental information to the management apparatus 200. The position and the speed of the traffic participant detected in each sensing area serve as environmental information. The sensor group 500 transmits the environmental information as a radio signal to the management apparatus 200. For example, the sensor group 500 and the management apparatus 200 transmit and receive data via a wireless network. For data communication between the sensor group 500 and the management apparatus 200, a general-purpose wireless network such as WiFi (registered trademark), 4G, 5G, or the like can be used.

Each of the sensors constituting the sensor groups 500 may have a wireless communication function. For example, each of the sensors constituting the sensor groups 500 is equipped with a radio signal communication device. Alternatively, communication devices may be attached to the sensors constituting the sensor group 500, to thereby transmit environmental information. The sensor group 500 may transmit a detection signal (detection data) as it is as a result of detection. Alternatively, the sensor group 500 may transmit a result (arithmetic data) of arithmetic processing of a detection signal (detection data) as a result of detection. The environmental information includes information about the position (the XYZ coordinates) and the velocity vector of a traffic participant. Note that the velocity vector is information including the moving speed and the moving direction of the traffic participant.

Referring again to Fig. 1, the explanation will be continued. The environmental information acquisition unit 202 acquires environmental information from the sensor group 500. The generation unit 203 generates traveling information based on the environmental information and the map information. The communication unit 204 transmits the traveling information to the vehicles 301 to 303. For example, the communication unit 204 and the vehicles 301 to 303 transmit and receive data via a wireless network. For data communication between the vehicle 301 and the management apparatus 200, a general-purpose wireless network such as WiFi (registered trademark), 4G, 5G, or the like can be used. Further, the communication unit 204 may receive a radio signal serving as environmental information. In this case, the environmental information acquisition unit 202 acquires the environmental information by performing decoding processing or the like on the radio signal.

The generation unit 203 generates traveling information by integrating environmental information from a plurality of sensors with map information. For example, the generation unit 203 specifies the position (the coordinates) and the movement of a traffic participant based on the environmental information. The generation unit 203 integrates the information about the traffic participant with the map information. The generation unit 203 generates traveling information about a traveling route so that the vehicle 301 does not collide with the other vehicles 302 and 303 and a passerby.

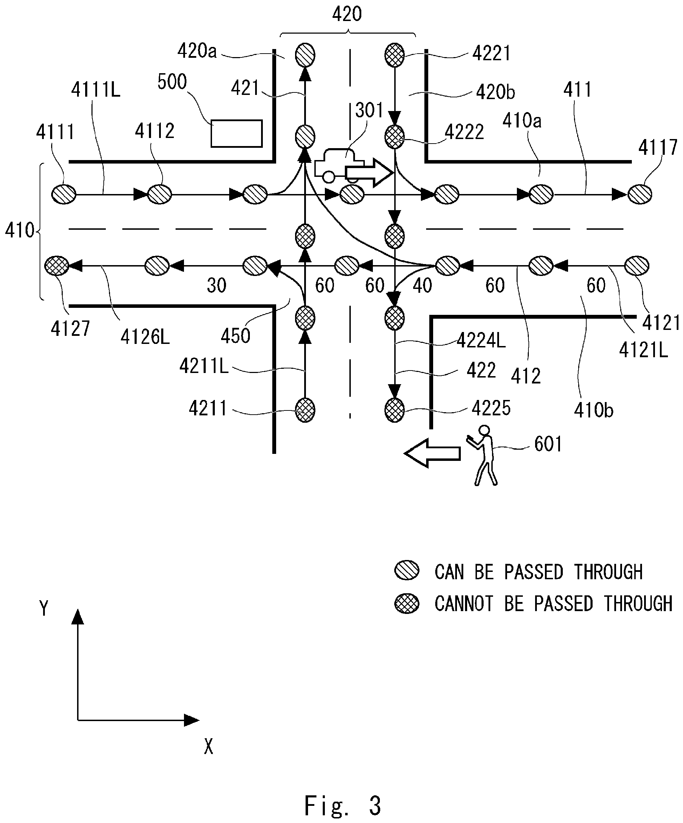

Fig. 3 is a schematic diagram for explaining a traveling route and traveling information. Fig. 3 is a diagram schematically showing an intersection 450 in which a road 410 intersects a road 420. The road 410 is parallel to the X direction and the road 420 is parallel to the Y direction. The roads 410 and 420 are each two-lane roads having one lane on each side thereof. As a matter of course, the directions of the roads 410 and 420 and the number of lanes thereof are not limited to particular ones.

The sensor group 500 is provided in the vicinity of the intersection 450. As described above, the sensor group 500 monitors the intersection 450 and the area around the intersection 450. For example, the sensor group 500 detects a physical quantity related to the vehicle 301 traveling on the road 410. Further, the sensor group 500 detects a physical quantity related to a passerby 601 present in the vicinity of the road 420. The sensor group 500 transmits the physical quantities related to the vehicle 301 and the passerby 601 as environmental information to the management apparatus 200.

First, the traveling route will be described. The road 410 includes a lane 410a and a lane 410b. The lane 410a is a lane opposite to the lane 410b. A traveling route 411 is set on the lane 410a in the +X direction. A traveling route 412 is set on the lane 410b in the -X direction. The road 420 includes a lane 420a and a lane 420b. A traveling route 421 is set on the lane 420a in the +Y direction. The lane 420a is a lane opposite to the lane 420b. A traveling route 422 is set on the lane 420b in the -Y direction.

The traveling routes 411 and 412 are formed along the lanes 410a and 410b, respectively. The traveling routes 421 and 422 are formed along the lanes 420a and 420b, respectively. Further, when a road branches at the intersection 450 or the like, a traveling route in a direction corresponding to a destination is assigned to the road. Here, the vehicle 301 travels along the traveling route 411. Vehicles traveling along the traveling routes 412, 421, and 422 are not shown.

The traveling routes 411, 412, 421, and 422 are respectively composed of a plurality of nodes and a plurality of links. In Fig. 3, the traveling route 411 includes nodes 4111, 4112, and 4117, a link 4111L, and the like. The nodes 4111 and 4112 are connected to each other by the link 4111L. The traveling route 412 includes nodes 4121 and 4127, links 4121L and 4126L, and the like. The traveling route 421 include a node 4211, a link 4211L, and the like. The traveling route 422 includes nodes 4221, 4222, and 4225, a link 4224L, and the like.

Nodes and links are included in map information. A plurality of nodes are arranged along each lane. For example, on the map information, a plurality of nodes are arranged at equal intervals for each lane. For example, coordinates in the map information are assigned to the nodes. That is, latitude, longitude, altitude, and the like are associated with the ID of each node. Here, XYZ coordinates unique to each node are defined. A traveling route serves as a line that connects a node of a starting place to a node of a destination.

A link connects nodes adjacent to each other. The link is defined as a line that connects two nodes to each other. Alternatively, in the intersection 450 or a curve, the link may be a curved line that connects two nodes to each other. For example, the link may have a circular arc shape or the like. A radius of curvature of the arc may be determined in accordance with the shape, the width, the speed limit, and the like of a road. ID information of each of two nodes connected to the link is assigned for each link to the map information. Further, information indicating a straight line or a curved line and information about the radius of curvature (also collectively referred to as shape information) are assigned to the map information. At a branch point such as an intersection, two or more links may extend from one node.

Next, traveling information will be described. The traveling information includes at least one of passage feasibility information and speed information. For example, each node is associated with traveling information about whether or not the node can be passed through. As shown in Fig. 3, the nodes 4111 and 4112 and the like can be passed through, while the nodes 4211, 4222, and 4225 and the like cannot be passed through. That is, passage feasibility information indicating whether it is possible or not possible to pass through a node is added for each node. A vehicle is stopped by automated driving control at the node that cannot be passed through. The traveling information may have the same function as that of an existing traffic light. Further, the passage feasibility information may be different for each vehicle. For example, it is possible to set the passage feasibility information in accordance with the model or the type of the vehicle.

The generation unit 203 may predict a behavior of a vehicle other than the vehicle or a behavior of the passerby 601 based on environmental information. Further, the generation unit 203 generates traveling information based on a result of the prediction. For example, the generation unit 203 predicts a behavior intention and a behavior interaction of a traffic participant based on the map information and the environmental information. When it is predicted, for example, that the passerby 601 will cross a road, the generation unit 203 predicts at which position in the road he/she crosses. Then the node corresponding to the position predicted to be crossed may be set so that it cannot be passed through.

An example in which the passerby 601 crosses a road will be described below. The passerby 601 is about to cross the road 420 on the -Y side of the intersection 450. The sensor group 500 detects a physical quantity related to the passerby 601 and transmits it as environmental information to the management apparatus 200. The generation unit 203 generates passage feasibility information indicating whether or not the node can be passed through based on the environmental information. In this case, the generation unit 203 sets the node 4225, a node 4212, and the like located in the vicinity of the passerby 601 so that they cannot be passed through. The generation unit 203 updates the passage feasibility information in accordance with the latest environmental information.

The vehicle 301 traveling in the lane 410a is passing through the intersection 450. The sensor group 500 detects a physical quantity related to the vehicle 301 and transmits it as environmental information to the management apparatus 200. The generation unit 203 generates passage feasibility information indicating whether or not the node can be passed through based on the environmental information. In this case, the generation unit 203 sets the node 4222 and the like located in the vicinity of the vehicle 301 so that they cannot be passed through. On the road 420 crossing the road 410 on which the vehicle 301 travels, the generation unit 203 updates the node 4222 and the like located in the vicinity of the vehicle 301 so that they cannot be passed through. The generation unit 203 sequentially updates the passage feasibility information based on the latest environmental information.

In this way, when the passerby 601 or a vehicle other than the vehicle is detected, traveling information for the vehicle is generated. When the other vehicle or the passerby 601 is detected in the vicinity of the vehicle 301, the generation unit 203 sets the node so that it cannot be passed through in the traveling route of the vehicle 301. When the passerby 601 and the like are no longer detected in the vicinity of the intersection, the generation unit 203 determines that the passerby 601 and the other vehicle have passed through the node, and sets the node again so that it can be passed through.

Next, speed information indicating a traveling speed will be described. Each link is associated with speed information about a traveling speed. In Fig. 3, reference numerals 60, 40, and 30 denote traveling speeds (km) associated with the respective links. For example, the traveling speed of the link 4121L is 60 km. The traveling speed may indicate a speed limit (an upper limit speed) of the vehicle. The traveling speed at a straight link is high, while the traveling speed at a link curving at the intersection 450 or the like may be low.

The generation unit 203 generates traveling information including at least one of the passage feasibility information and the traveling speed. The communication unit 204 transmits the traveling information to the vehicle 301. Note that the management apparatus 200 may acquire position information of the vehicle 301 from the vehicle 301, and transmit only the traveling information about the area around the vehicle 301. Alternatively, the management apparatus 200 may transmit, to the vehicle 301, the traveling information about the traveling route of the vehicle 301 to a destination. In this case, the management apparatus 200 transmits a route from the node of a starting place to the node of a destination to the vehicle 301. Further, the management apparatus 200 may transmit only the difference between the previous traveling information and the updated traveling information.

The vehicle 301 travels along the traveling route to a destination. The vehicle 301 travels or stops in accordance with passage feasibility information. That is, when the node that cannot be passed through is located on the traveling route of the vehicle 301, the vehicle 301 stops before this node. When the node that can be passed through is located, the vehicle 301 travels along the link extending from this node. Further, the vehicle 301 travels at a traveling speed corresponding to each link. The vehicle 301 can travel along each link on the traveling route 411 at an appropriate traveling speed.

In this way, it is possible to appropriately manage traveling of the vehicle 301. The vehicle 301 can travel without coming into contact with a traffic participant such as the passerby 601 and another vehicle. Further, since the sensor group 500 is disposed in the traveling environment such as the intersection 450, a physical quantity related to the traffic participant can be detected without there being any blind spot. For example, in a configuration in which a sensor is disposed in a vehicle, it is difficult to detect a traffic participant present at a position that cannot be directly seen from the vehicle. Further, in a configuration in which a large number of sensors are disposed for each vehicle, it is difficult to reduce the cost of installation of sensors in the whole system. By installing the sensor group 500 like in this embodiment, it is possible to reduce the cost of installation of sensors in the whole system.

Note that traveling information, such as passage feasibility information and information about the traveling speed, may be different for each vehicle or may be the same for two or more vehicles. That is, it is possible to generate the passage feasibility information and the information about the traveling speed separately for each vehicle. For example, the traveling information may be generated based on vehicle information such as the model, the width, and the license number of the vehicle. Specifically, the generation unit 203 may compare a road width with a vehicle width, and when the road width is insufficient, the generation unit 203 may set the road so that it cannot be passed through. Further, the generation unit 203 may change the traveling speed in accordance with the model or the type of the vehicle.

### Specific Example 1

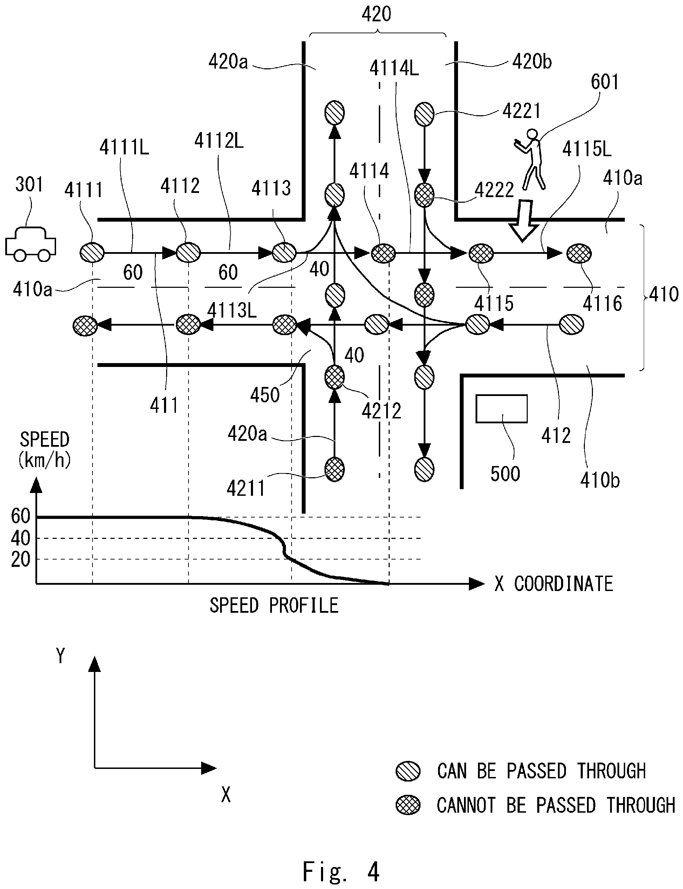

A specific example 1 of traveling information will be described with reference to Fig. 4. Like Fig. 3, Fig. 4 is a diagram schematically showing the intersection 450 in which the road 410 intersects the road 420. In the specific example 1, the vehicle 301 is an automated driving vehicle and is traveling straight in the +X direction. Before the intersection 450, the vehicle 301 is traveling in the lane 410a along the traveling route 411.

The traveling route 411 includes the nodes 4111 and 4112, nodes 4113 to 4116, the link 4111L, and links 4112L to 4115L. Further, on the +X side of the intersection 450, the passerby 601 is about to cross the road 410. Specifically, the passerby 601 is about to cross the road 410 at the position of the link 4115L.

As described above, the sensor group 500 detects the position and the movement of each of the vehicle 301 and the passerby 601. Then the sensor group 500 transmits a result of the detection as environmental information. The generation unit 203 predicts that the passerby 601 is about to cross the road 410 based on the environmental information. The generation unit 203 updates the traveling speed and the passage feasibility information based on a result of the prediction. For example, the generation unit 203 sets the nodes 4114, 4115, 4116, and the like so that they cannot be passed through. On the other hand, the nodes 4111 to 4113 can be passed through.

Further, the generation unit 203 sets the traveling speed at each of the links 4111L and 4112L to 60 km and the traveling speed at the link 4113L to 40 km. The generation unit 203 reduces the traveling speed at the link 4113L connected to the node 4114 that cannot be passed through.

Fig. 4 shows a graph of a speed profile with respect to the X coordinate. The traveling speed is reduced gradually from the node 4112 that can be passed through to the node 4114 that cannot be passed through. As described above, the generation unit 203 generates traveling information including passage feasibility information and speed information. The communication unit 204 transmits the traveling information to the vehicle 301. The traveling speed is associated with the link on the traveling route, and the passage feasibility information is associated with the node. Thus, it is possible to appropriately manage the vehicle 301. The vehicle 301 reduces its speed as it approaches the intersection 450. Then the vehicle 301 stops at the node 4114. Further, on the traveling route 421 on the lane 420a, the generation unit 203 sets the nodes 4211 and 4212 so that they cannot be passed through. In this way, it is possible to prevent another vehicle from coming into contact with the stopped vehicle 301.

### Specific Example 2

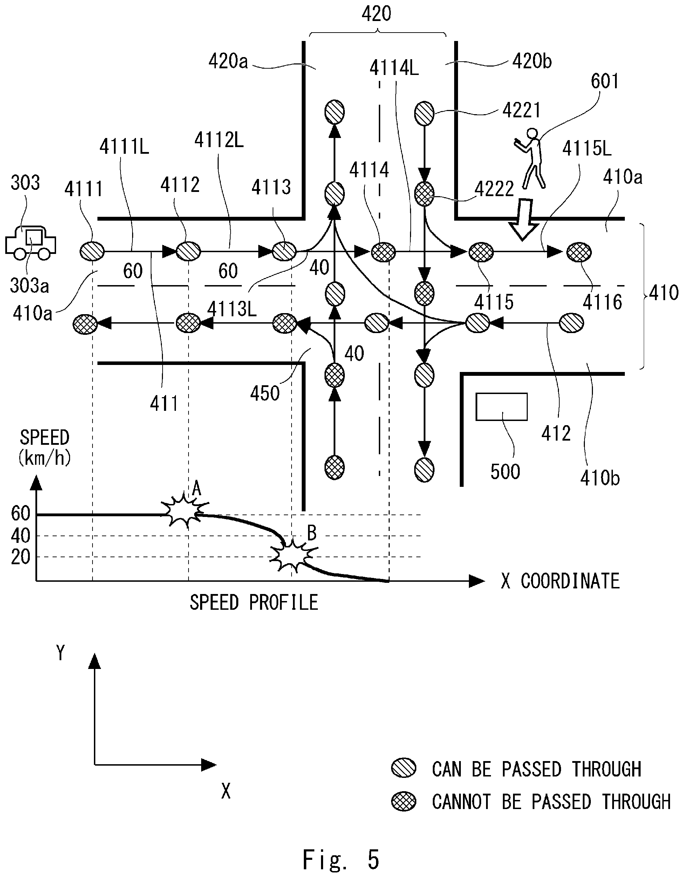

A specific example 2 of traveling information will be described with reference to Fig. 5. In the specific example 2, the vehicle 303 is a non-automated driving vehicle (a manual driving vehicle). That is, a driver who rides in the vehicle 303 is driving the vehicle 303. The configurations other than the configuration in which the vehicle 303 is a non-automated driving vehicle are similar to those of the specific example 1, and the detailed descriptions thereof will thus be omitted. For example, in the specific example 2, as in the case of the specific example 1, the vehicle 303 travels in the +X direction along the lane 410a, and the passerby 601 is about to cross the road 410. Further, a vehicle-mounted terminal 303a is mounted on the vehicle 303. The vehicle-mounted terminal 303a includes a display, a speaker, and the like. The vehicle-mounted terminal 303a can be implemented by, for example, a car navigation system. Further, the vehicle-mounted terminal 303a has a radio communication function.

Since the vehicle 303 is a non-automated driving vehicle, it cannot travel automatically even if a traveling route is provided. In this case, the management system 100 performs control so as to output warning information to the vehicle 303. The generation unit 203 generates warning information in accordance with map information and environmental information. Specifically, when the node that cannot be passed through is located in the vicinity of the vehicle 303 on the traveling route of the vehicle 303, the generation unit 203 generates warning information. The communication unit 204 transmits the warning information to the vehicle 303.

When the vehicle 303 receives the warning information, the vehicle-mounted terminal 303a of the vehicle 303 issues a warning to the driver. For example, the display of the vehicle-mounted terminal 303a displays a message urging the driver to reduce the speed of the vehicle or stop the vehicle. Here, a head-up display provided in the vehicle 303 displays a message, whereby it is possible to alert the driver of the vehicle 303 more effectively. Alternatively, a voice message urging the driver to reduce the speed of the vehicle or stop the vehicle may be output from a vehicle-mounted speaker of the vehicle 303. Alternatively, a warning using, for example, a vibrator may be output.

The sensor group 500 detects an actual speed of the vehicle 303. The management apparatus 200 receives the actual speed of the vehicle 303. Alternatively, the management apparatus 200 receives the actual speed of the vehicle 303 from the vehicle 303. When the actual speed of the vehicle 303 exceeds the traveling speed of the traveling information, the communication unit 204 transmits the warning information to the vehicle 303.

For example, at the position (a position A in the speed profile) of the node 4112, the display displays a message "slow down". At the position (a position B in the speed profile) of the node 4113, the display displays a message "stop the vehicle". This configuration makes it possible to appropriately alert the driver. As a matter of course, the vehicle-mounted terminal 303a may output not only a warning message but also an alarm sound or the like. Further, at least part of processing for generating warning information may be performed by the vehicle-mounted terminal.

Further, the vehicle-mounted terminal 303a is not limited to a physically single apparatus. For example, a car navigation apparatus and a smartphone may cooperate to perform the above processing.

### Specific Example 3

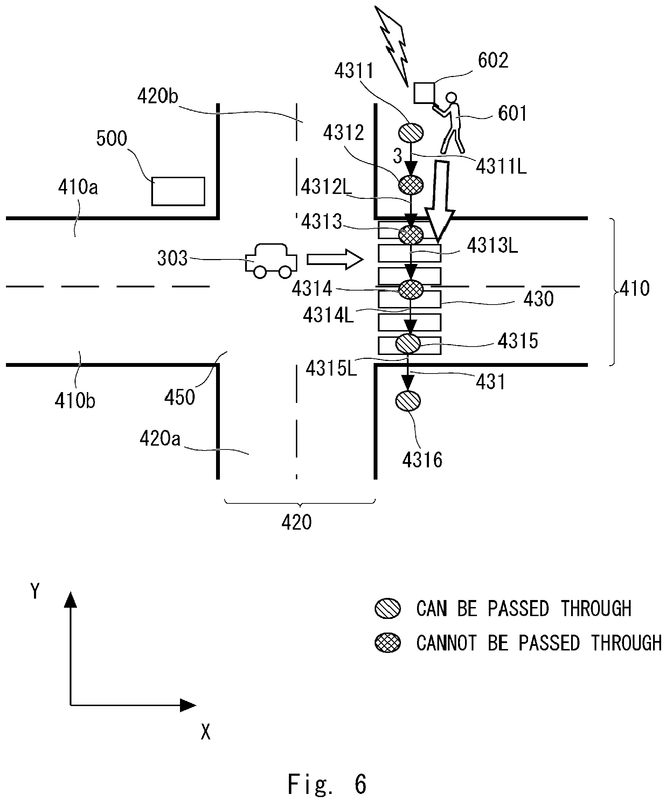

A specific example 3 of traveling information will be described with reference to Fig. 6. In the specific example 3, warning information is output to the passerby 601 instead of to the vehicle 303. For example, in the specific example 3, a message urging the passerby 601 to stop is output. Therefore, a traveling route 431 for passersby is set in a pedestrian crossing 430. Note that in Fig. 6, routes for vehicles are omitted.

For example, the pedestrian crossing 430 for the passerby 601 to cross the road 410 is provided in the vicinity of the intersection 450. The traveling route 431 is set along the pedestrian crossing 430. The traveling route 431 includes nodes 4311 to 4316 and links 4311L to 4315L. That is, the nodes 4311 to 4316 and the links 4311L to 4315L are provided in the pedestrian crossing 430 and the area around it. The link 4311L connects the node 4311 to the node 4312. Similarly, the nodes 4312 to 4316 are connected by the respective links 4312L to 4315L. The pedestrian crossing 430 and the traveling route 431 are provided along the Y direction.

The sensor group 500 detects that the passerby 601 holding a portable terminal 602 is about to cross the pedestrian crossing 430. It is assumed here that the vehicle 303 is about to pass through the intersection 450 without reducing its speed. The sensor group 500 detects the movement of the vehicle 303 and transmits it to the management apparatus 200. If the vehicle 303 keeps traveling, it will cross the links 4312L and 4313L. The generation unit 203 sets the nodes 4312 to 4314 connected to the links 4312L and 4313L so that they cannot be passed through.

The generation unit 203 specifies the passerby 601 who is about to cross the pedestrian crossing 430 based on environmental information. The sensor group 500 can specify the passerby 601, for example, by face recognition. Note that the generation unit 203 may specify the portable terminal 602 held by the passerby 601 instead of specifying the passerby 601. The portable terminal 602 transmits information such as a terminal ID together with position information of the portable terminal 602, whereby the generation unit 203 may specify the portable terminal 602. The portable terminal 602 is, for example, a smartphone. Alternatively, the portable terminal 602 may be a wearable terminal such as a smartwatch, smart glasses, or an earphone(s).

The generation unit 203 detects that the vehicle 303 is approaching the passerby 601 from the environmental information. Then the communication unit 204 transmits warning information to the portable terminal 602 of the passerby 601. The portable terminal 602 then outputs a warning message. For example, a message such as "stop", "watch out for vehicles", or "a vehicle is approaching from the right" is displayed on a display or the like. Alternatively, the portable terminal 602 may output a voice message through a speaker. The portable terminal 602 may give a notification using, for example, a vibrator. By doing so, it is possible to effectively alert the passerby 601.

Alternatively, part of processing for generating a warning message may be performed by the portable terminal 602. For example, the communication unit 204 transmits traveling route, traveling information, environmental information, or the like to the portable terminal 602. The portable terminal 602 compares the position, the velocity vector, and the like of the vehicle 303 with those of the passerby 601. The portable terminal 602 generates a warning message in accordance with a result of the comparison. By doing so, it is possible to effectively alert the passerby 601. Further, the position of the pedestrian crossing 430 may be detected by cameras of the sensor group 500. Alternatively, the position of the pedestrian crossing 430 may be included in map information.

### Specific Example 4

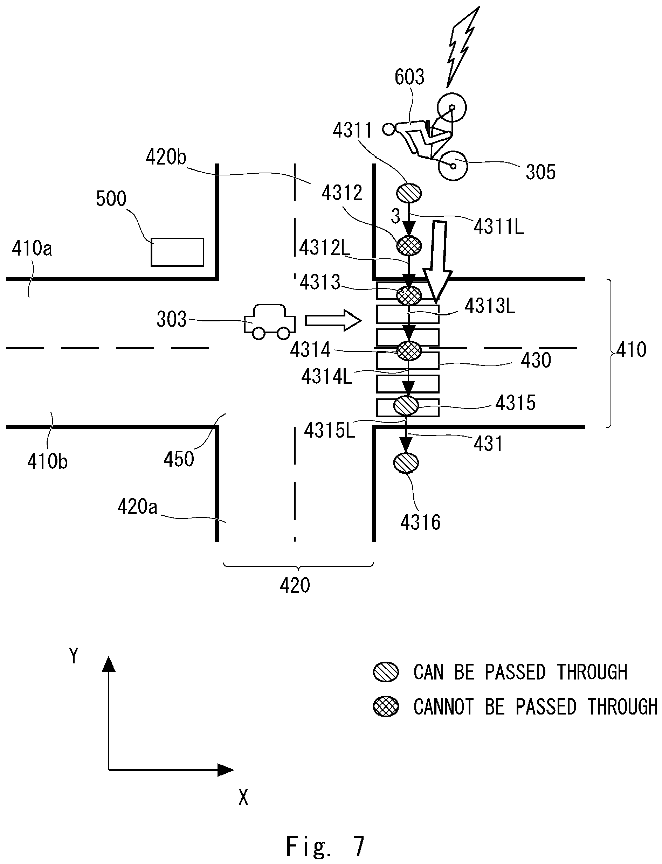

A specific example 4 of traveling information will be described with reference to Fig. 7. In the specific example 4, a passerby 603 is riding in a vehicle 305. It should be noted that the vehicle 305 is a two-wheeled vehicle such as a bicycle. The vehicle 305 has a communication function. Further, the vehicle 305 includes an output device, such as a display or a speaker, for outputting a warning message. Note that the configurations other than the above are similar to those of the specific example 3, and the descriptions thereof will be thus omitted.

The vehicle 305 has a communication function similar to that of the vehicle 301 or the like. Accordingly, the vehicle 305 receives traveling information or warning information. The vehicle 305 includes a display, a speaker, or the like for outputting a warning message. As a matter of course, part of processing for generating a warning message may be performed by the vehicle 305. By doing so, as in the case of the specific example 3, it is possible to effectively alert the passerby.

Alternatively, the vehicle 305 may have an automated driving function. When the vehicle 305 receives warning information, the vehicle 305 reduces its speed or stops. By doing so, it is possible to travel more safely. Further, the portable terminal held by the passerby 603 may perform part or all of the above processing.

### Specific Example 5

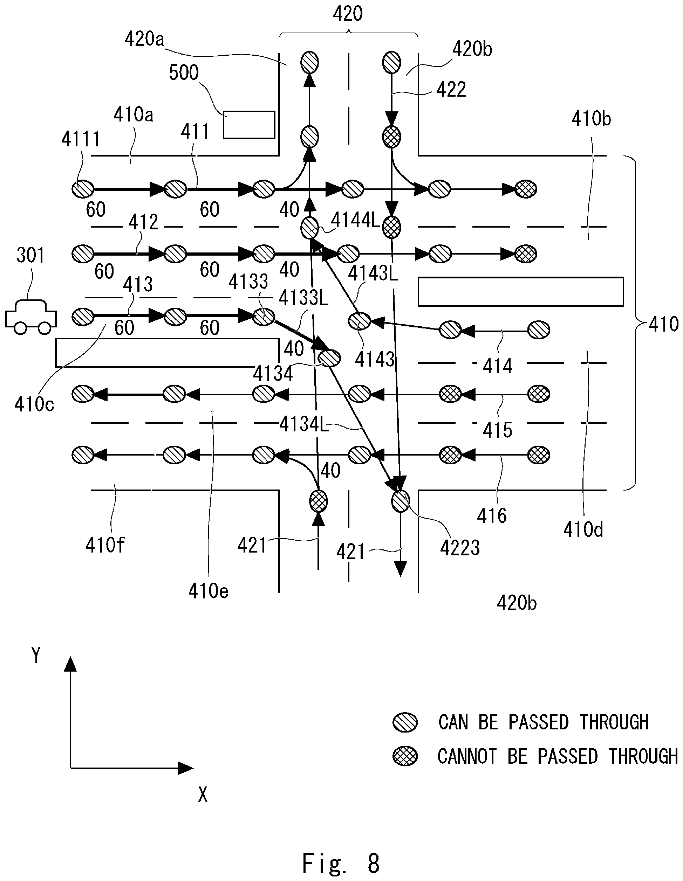

A specific example 5 of traveling information will be described with reference to Fig. 8. In Fig. 8, the road 410 includes the lanes 410a and 410b and lanes 410c to 410f. Note that the configurations other than the number of lanes of the road 410 are similar to those in Figs. 3, 4, and the like, and the descriptions thereof will thus be omitted. For example, as in the cases of Figs. 3 and 4, the road 420 includes the lanes 420a and 420b.

The lanes 410a to 410c are lanes on which vehicles travel in the +X direction. The lanes 410d to 410f are lanes on which vehicles travel in the -X direction. The traveling routes 411 and 412 and traveling routes 413 to 416 are set in the respective lanes 410a to 410f. Further, the lane 410c is a right-turn-only lane. Therefore, the traveling route 413 extends in the direction from the lane 410c toward the lane 420b. Similarly, the lane 410d is a right-turn-only lane. Therefore, the traveling route 414 extends in the direction from the lane 410d toward the lane 420a.

Specifically, in the traveling route 413, nodes 4133, 4134, and 4223 are disposed in this order. The node 4133 is on the lane 410c. The node 4134 is in the intersection 450. The node 4223 is on the lane 420b. The node 4133 is connected to the node 4134 through a link 4133L. The node 4134 is connected to the node 4223 through a link 4134L.

As described above, when the road 410 includes a plurality of lanes in which traffic moves in the same direction, traveling information may be set for each lane. Traveling of a vehicle can be managed in a manner similar to that when the signals of an existing traffic light are managed. For example, passage feasibility information of a lane with a green signal is set so that the lane can be passed through, and passage feasibility information of a lane with a red signal is set so that the lane cannot be passed through. In the traveling routes 411, 412, 415, and 416, the generation unit 203 sets the nodes located in the vicinity of the intersection 450 so that they cannot be passed through. By doing so, it is possible to provide a time period in which only a right turn is permitted. Thus, it is possible to appropriately manage traveling of a vehicle. Further, when a traffic light has already been installed, the generation unit 203 may change traveling information in accordance with the timing of the signal. Alternatively, the management apparatus 200 may control the timing of the signal in accordance with a switching timing of the traveling information.

### Specific Example 6

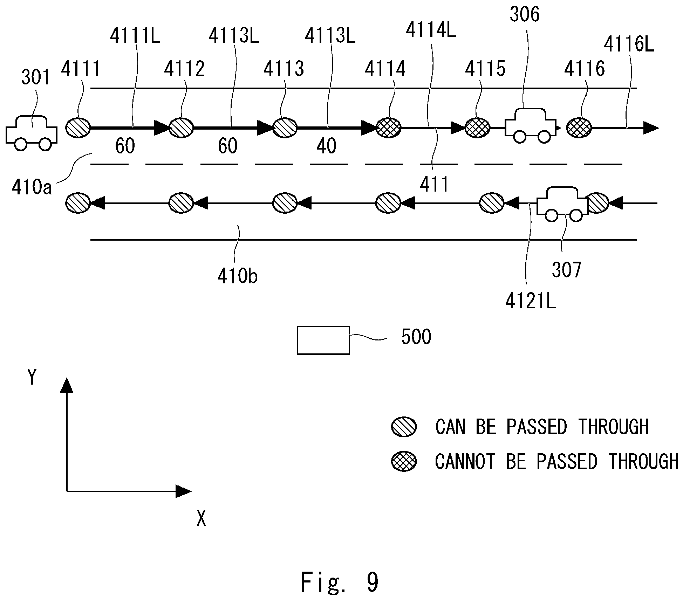

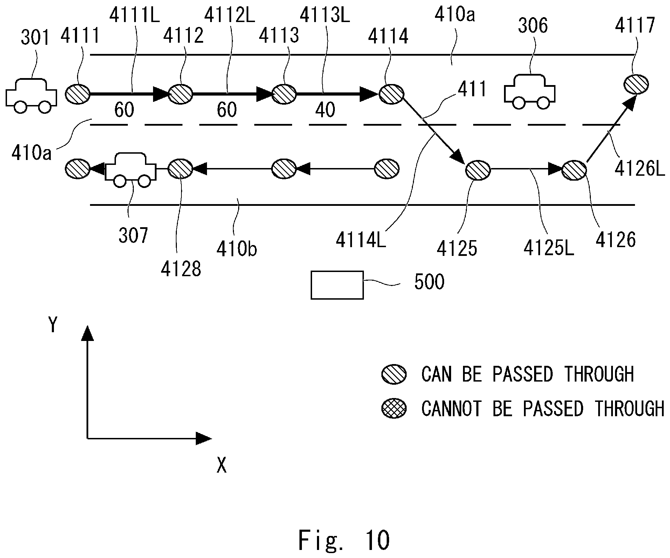

A specific example 6 of traveling information will be described with reference to Figs. 9 and 10. In the specific example 6, a vehicle 306 is stopped in the lane 410a due to a failure or the like. The configurations other than the above are similar to those in Figs. 3 and 4, and the descriptions thereof will thus be omitted. The sensor group 500 detects that the vehicle 306 is stopped in the lane 410a. Further, the generation unit 203 determines whether the vehicle 306 can be overtaken. Fig. 9 shows an example in which the vehicle 306 cannot be overtaken, while Fig. 10 shows an example in which the vehicle 306 is overtaken. Note that, as shown in Fig. 9, it is assumed that before the vehicle 306 is detected, the traveling route 411 is a straight line parallel to the X direction in the lane 410a.

For example, the generation unit 203 determines whether or not the vehicle 301 can overtake the stopped vehicle 306 based on environmental information. Specifically, the generation unit 203 detects whether or not other traffic participants are present in the vicinity of the vehicle 306. When other traffic participants are present in the vicinity of the vehicle 306, the generation unit 203 determines that the vehicle 306 cannot be overtaken. That is, the generation unit 203 determines that the vehicle 306 can be overtaken when there are no other traffic participants at the positions which are to constitute an overtaking trajectory on the lane 410b.

For example, as shown in Fig. 9, it is assumed that a vehicle 307 is traveling on the link 4121L on the lane 410b. The sensor group 500 detects the position of the vehicle 307. Since the vehicle 307 is located in the vicinity of the vehicle 306, the generation unit 203 determines that the vehicle 306 cannot be overtaken. In this case, the generation unit 203 sets the nodes 4114, 4115, and 4116 located before and after the vehicle 306 so that they cannot be passed through. Therefore, the vehicle 301 stops at the position of the node 4114 by automated driving.

Meanwhile, as shown in Fig. 10, when the sensor group 500 does not detect other traffic participants around the vehicle 306, the generation unit 203 determines that the vehicle 306 can be overtaken. That is, since there are no traffic participants at the positions which are to constitute the overtaking trajectory on the lane 410b, the vehicle 301 can safely overtake the vehicle 306. When the vehicle 306 can be overtaken, the generation unit 203 provides the overtaking trajectory. The generation unit 203 changes the traveling route 411 so that the vehicle 301 protrudes from the lane 410a and travels in the lane 410b.

Specifically, the link 4114L extending from the node 4114 is connected to a node 4125 on the lane 410b. Further, the link 4126L extending from a node 4126 located on the lane 410b is connected to the node 4117 located on the lane 410a. Therefore, the generation unit 203 generates the traveling route 411 so that the vehicle 301 makes a detour to avoid the vehicle 306. That is, the generation unit 203 changes the connection destination of the link based on the environmental information. By doing so, it is possible to change the traveling route 411.

In Fig. 9, since the vehicle 307 becomes an obstacle to the overtaking, the node 4114 and the like are set so that they cannot be passed through. On the other hand, in Fig. 10, the vehicle 307 does not become an obstacle to the overtaking, because it has passed through a node 4128. When the sensor group 500 detects that the vehicle 307 has passed through the node 4128, the generation unit 203 may change the traveling route 411 as shown in Fig. 10.

The vehicle 301 travels along the changed traveling route 411. Therefore, the vehicle 301 can travel so as to avoid the vehicle 306. By this configuration, the vehicle 301 can overtake the vehicle 306, and accordingly it is possible to more efficiently manage the traveling of a vehicle. As described above, when the sensor group 500 detects the vehicle 306, the generation unit 203 corrects the traveling route 411 so that the vehicle 301 avoids the vehicle 306.

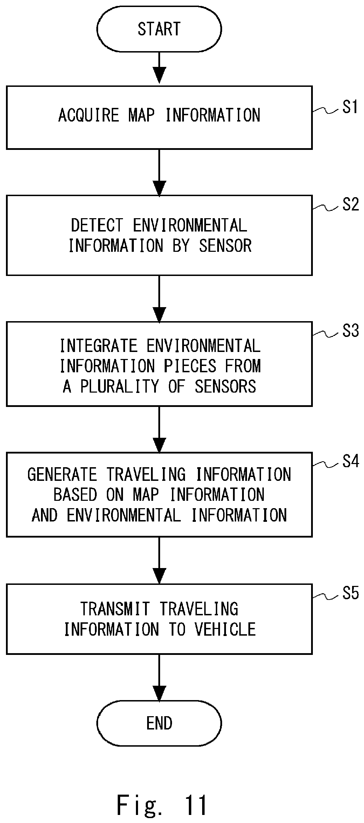

A vehicle management method according to this embodiment will be described with reference to Fig. 11. Fig. 11 is a flowchart showing the vehicle management method performed by the vehicle management apparatus 200. First, the map information acquisition unit 201 acquires map information (S1). Next, the sensor 501 detects environmental information (S2). The generation unit 203 integrates environmental information pieces from the plurality of sensors 501 to 504 (S3).

The generation unit 203 generates traveling information based on the map information and the environmental information (S4). For example, the generation unit 203 generates information and instructions for mobility from an intention (a prediction of a behavior intention) and an interaction (a prediction of an environmental interaction) based on physical quantities and spatial information detected by the sensor. For example, the generation unit 203 provides a node with passage feasibility information indicating whether or not the node can be passed through. Further, the generation unit 203 provides a link with speed information indicating a traveling speed instruction. The communication unit 204 transmits the traveling information to a vehicle (S5). Note that the vehicle management system 100 may aggregate information pieces in the cloud and transmit it to the vehicle 301. By doing so, it is possible to appropriately manage a plurality of vehicles.

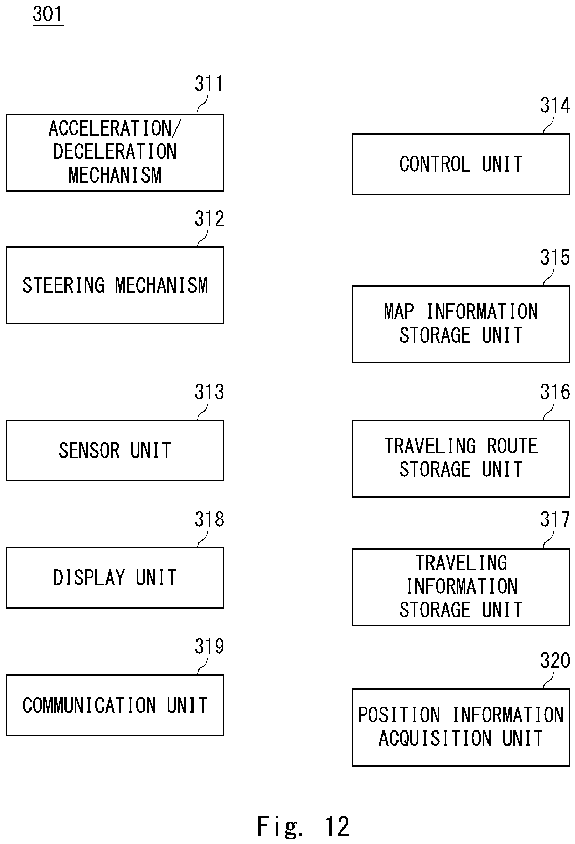

A control system of the vehicle 301 will be described with reference to Fig. 12. Fig. 12 is a block diagram showing the control system of the vehicle 301. The vehicle 301 includes an acceleration/deceleration mechanism 311, a steering mechanism 312, a sensor unit 313, a control unit 314, and a map information storage unit 315. The vehicle 301 includes a traveling route storage unit 316, a traveling information storage unit 317, a display unit 318, a communication unit 319, and a position information acquisition unit 320.

The acceleration/deceleration mechanism 311 controls speed of the vehicle 301. That is, the acceleration/deceleration mechanism 311 operates an accelerator and a brake of the vehicle 301 so that the vehicle 301 travels at a desired speed. Note that the vehicle 301 may be an electric vehicle or a gasoline-powered vehicle. The acceleration/deceleration mechanism 311 may directly control an engine, a motor, and the like of the vehicle 301.

The steering mechanism 312 controls a traveling direction of the vehicle. That is, the steering mechanism 312 operates the steering of the vehicle 301 so that the vehicle 301 travels in a desired direction. The steering mechanism 312 controls the steering angles of the wheels.

The sensor unit 313 detects information about an environment in which the vehicle 301 is traveling. For example, the sensor unit 313 includes various sensors such as a camera, a stereo camera, a millimeter-wave radar, a laser range finder, a distance sensor, an acceleration sensor, a gyro sensor, and a Global Positioning System (GPS) sensor. It is possible to recognize the surroundings from an image around the vehicle shot by a camera or a stereo camera. Further, it is possible to detect a distance to a nearby vehicle or object by a millimeter-wave radar, a laser range finder, a distance sensor, and the like. As a matter of course, the sensor unit 313 may include the one or more aforementioned sensors of various kinds, and may include sensors other than those illustrated above. The sensor unit 313 outputs information which the sensor has detected to the control unit 314 or the like.

The map information storage unit 315 stores map information of a traveling environment. The map information storage unit 315 includes a memory or the like for storing the map information. The map information may be map information transmitted from the management apparatus 200. Further, the map information may be map information of a general-purpose navigation system. The map information includes the coordinates of each node. Further, the map information includes the connection destinations of the links and the shape information of the links.

The traveling route storage unit 316 stores a traveling route. The traveling route storage unit 316 includes a memory or the like for storing data regarding the traveling route. The traveling route is generated by a route search from the position of a vehicle to a destination. The traveling route includes data regarding the nodes and the links. The traveling route storage unit 316 may store the nodes in the order in which the vehicle passes through them. Note that the traveling route may be searched for by the vehicle or by the management apparatus 200. When the management apparatus 200 has searched for a traveling route, it transmits the traveling route to the vehicle. Then the traveling route transmitted from the management apparatus 200 is stored in the memory or the like. When the vehicle 301 has searched for a traveling route, it transmits the traveling route to the management apparatus 200.

The traveling information storage unit 317 stores traveling information. The traveling information storage unit 317 includes a memory or the like for storing data regarding the traveling information. The traveling information includes passage feasibility information indicating whether or not each node can be passed through. Further, the traveling information includes speed information indicating a traveling speed of each link. The traveling information transmitted from the management apparatus 200 is stored in the memory or the like. Further, upon receiving the traveling information from the management apparatus 200, the traveling information stored in the traveling information storage unit 317 is updated.

The position information acquisition unit 320 acquires position information of its own vehicle. The position information acquisition unit 320 acquires the current position of the vehicle 301. The position information acquisition unit 320 acquires the current position of its own vehicle, for example, by using a GPS sensor, a vehicle speed pulse, or the like. The position information acquisition unit 320 determines the current position of the vehicle 301. That is, the position information acquisition unit 320 sequentially updates the position of its own vehicle. The position information acquisition unit 320 may acquire position coordinates such as the latitude and the longitude by using a positioning system other than the GPS. The position information acquisition unit 320 may acquire the position information based on a result of the detection performed by the sensor unit 313. Specifically, the position information acquisition unit 320 may calculate the position information based on the acceleration detected by the acceleration sensor.

Alternatively, the position information may be acquired in accordance with results of operations performed by the acceleration/deceleration mechanism 311 and the steering mechanism 312. The acceleration/deceleration mechanism 311 may output, to the position information acquisition unit 320, acceleration and deceleration information indicating acceleration and deceleration operations. Alternatively, the steering mechanism 312 may output steering information indicating a steering operation to the position information acquisition unit 320. The position information acquisition unit 320 may acquire the position information by combining two or more of the above information pieces. In this way, the position information acquisition unit 320 can calculate the position (the position of its own vehicle) of the vehicle 301 in the map information.

The communication unit 319 transmits and receives data to and from the management apparatus 200. The communication unit 319 and the communication unit 204 transmit and receive data, for example, via a wireless network. For data communication between the vehicle 301 and the management apparatus 200, a general-purpose wireless network such as WiFi (registered trademark), 4G, 5G or the like can be used. When the management apparatus 200 updates the traveling information, the traveling route, the map information, and the like, the communication unit 319 receives these updated information pieces. By doing so, the data of various kinds of information stored in the memory is updated. Further, the communication unit 319 transmits traveling information, destination information, passenger information, and the like of the vehicle 301 to the management apparatus 200. Further, when the vehicle has performed a route search, the communication unit 319 transmits the traveling route to the management apparatus 200. The management apparatus 200 may manage the traveling route and the traveling information based on the position of each vehicle.

The display unit 318 includes a display that displays a map or the like corresponding to the map information. The display unit 318 includes display means such as a liquid crystal display or a head-up display (HUD). For example, the display unit 318 may be configured as a monitor of a car navigation system. The display unit 318 superimposes and displays the position of its own vehicle on a map corresponding to the map information. By doing so, the display unit 318 displays an icon indicating the position of its own vehicle on the map corresponding to the map information, so that a passenger can recognize the position of his/her own vehicle on the map.

Further, the display unit 318 may include a touch panel for inputting necessary information. By this configuration, it is possible to input a destination or the like. As a matter of course, the display unit 318 is configured to not only be mounted on the vehicle 301, but also be removable from the vehicle 301. For example, the display unit 318 may be composed of a smartphone, a tablet terminal, or a portable car navigation system. As a matter of course, a passenger may input various kinds of information by voice using a microphone of the portable terminal or a vehicle-mounted microphone.

The control unit 314 includes a processor, a memory, and the like, and controls each of the aforementioned control blocks. When a passenger inputs a destination or a via place, the control unit 314 refers to the traveling information, the map information, and the like to retrieve an optimum route. Further, the control unit 314 outputs control signals to the acceleration/deceleration mechanism 311 and the steering mechanism 312 based on the map information, the traveling information, and the like. That is, the control unit 314 controls the acceleration/deceleration mechanism 311 and the steering mechanism 312 so that the vehicle 301 travels based on the traveling information. By doing so, the vehicle 301 travels along the traveling route. The vehicle 301 makes a temporary stop or the like at the position of the node. The vehicle 301 travels at a speed equal to or lower than the traveling speed set in the link.

For example, the control unit 314 outputs control signals for controlling the acceleration/deceleration mechanism 311 and the steering mechanism 312. The control unit 314 performs automated driving control using the map information, the position of its own vehicle, the traveling route, and the traveling information. The control unit 314 controls the steering mechanism 312 and the like so that the vehicle 301 travels along the traveling route. Further, the control unit 314 controls the acceleration/deceleration mechanism 311 in accordance with the traveling speed or the like set in each link. Further, when the sensor unit 313 detects pedestrians or vehicles other than its own vehicle, the control unit 314 controls the steering mechanism 312 and the acceleration/deceleration mechanism 311 so as to avoid them.

Each vehicle 301 has a unique ID. Thus, the management apparatus 200 may collect the information of each vehicle together with the ID assigned thereto, whereby it is possible to facilitate the management of the management system 100. Further, the traveling information may be collected after anonymization of the personal information of a user or a passenger of the vehicle.

The display unit 318 may display the traveling route, the link, or the node. That is, the display unit 318 may display the map information, the traveling route, and the like on the monitor. The display unit 318 superimposes and displays the traveling route on the map displayed on a display screen. Further, when the display unit 318 includes a HUD, the display unit 318 may display the traveling route so that the traveling route is projected onto the actual traveling surface (the road surface).

Further, a manual driving vehicle, instead of an automated driving vehicle, may display the traveling route on a navigation screen. For example, the management apparatus 200 transmits the traveling route to the manual driving vehicle. The traveling route and the traveling information can be displayed not only on the navigation screen of the automated driving vehicle but also on the navigation screen of the manual driving vehicle. Thus, the driver of the manual driving vehicle can recognize the stop position and the traveling speed. Further, when the manual driving vehicle includes the HUD, it may display the traveling route, the traveling speed, the stop position, and the like.

Further, the traveling route may be superimposed on an image obtained by shooting an imaging range including the traveling route with a camera. For example, it is assumed that a passenger or a pedestrian has a portable terminal such as a smartphone. When a pedestrian or the like shoots the road with a camera of the portable terminal, the portable terminal superimposes and displays the traveling route on the shot image. By doing so, it is possible for the pedestrian or the passenger to recognize the traveling route on the display screen of the portable terminal. By using a portable terminal, a display thereof can display the links and the nodes like Augmented Reality (AR).

Note that although traveling information is assigned to each node and link according to the above description, the traveling information may be assigned in a way other than the above one. For example, traveling information may be assigned by a two-dimensional map such as a heat map or a potential map. For example, traveling information indicating a passage feasibility or a traveling speed may be assigned to map information.

The program(s) executed by the management apparatus 200 and the control unit 314 can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program(s) may be provided to a computer using any type of transitory computer readable media. Examples of transitory computer readable media include electric signals, optical signals, and electromagnetic waves. Transitory computer readable media can provide the program(s) to a computer via a wired communication line (e.g., electric wires, and optical fibers) or a wireless communication line.

Note that the present disclosure is not limited to the aforementioned embodiment and may be changed as appropriate without departing from the spirit of the present disclosure.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle management system (100) configured to manage a vehicle that travels along a traveling route, the vehicle (301) management system comprising:
a map information acquisition unit (201) configured to acquire map information including a road on which the vehicle (301) travels;
a sensor (501) configured to detect environmental information about another vehicle (301) or a passerby (601), the sensor being disposed in a traveling environment including the road and an area around the road;
a generation unit (203) configured to generate, based on the map information and the environmental information, traveling information about a traveling speed of the vehicle (301) on the traveling route or about whether or not the vehicle (301) can pass through the traveling route; and
a communication unit (204) configured to transmit the traveling information to the vehicle (301).

2. The vehicle management system (100) according to Claim 1, wherein
the vehicle (301) is an automated driving vehicle,
the communication unit (204) transmits the traveling information about the traveling route to the vehicle (301), and
the vehicle (301) travels on the traveling route in accordance with the traveling information.

3. The vehicle management system (100) according to Claim 1 or 2, wherein
the traveling route includes a plurality of nodes that are associated with coordinates of the map information and a link that connects the nodes to each other,
the node is associated with passage feasibility information indicating whether or not the node can be passed through, and
the link is associated with the traveling speed.

4. The vehicle management system (100) according to any one of Claims 1 to 3, wherein the generation unit (203) predicts a behavior of the other vehicle (302, 303) or the passerby based on the environmental information, and generates the traveling information based on a result of the prediction.

5. The vehicle management system (100) according to any one of Claims 1 to 4, wherein
the sensor (501) detects an actual speed of the vehicle, and
when the actual speed exceeds the traveling speed of the traveling information, the communication unit (204) transmits warning information to the vehicle.

6. The vehicle management system (100) according to any one of Claims 1 to 5, wherein a warning is issued to a driver of the other vehicle or the passerby in accordance with the traveling information.

7. A vehicle management method for managing a vehicle (301) that travels along a traveling route, the vehicle management method comprising:
acquiring map information including a road on which the vehicle (301) travels;
detecting environmental information about another vehicle (301) or a passerby (601) by a sensor (501) that is disposed in a traveling environment including the road and an area around the road;
generating, based on the map information and the environmental information, traveling information about a traveling speed of the vehicle (301) on the traveling route or about whether or not the vehicle (301) can pass through the traveling route; and
transmitting the traveling information to the vehicle (301).

8. The vehicle management method according to Claim 7, wherein
the vehicle (301) is an automated driving vehicle,
the traveling information about the traveling route is transmitted to the vehicle (301), and
the vehicle (301) travels on the traveling route in accordance with the traveling information.

9. The vehicle management method according to Claim 7 or 8, wherein
the traveling route includes a plurality of nodes that are associated with coordinates of the map information and a link that connects the nodes to each other,
the node is associated with passage feasibility information indicating whether or not the node can be passed through, and
the link is associated with the traveling speed.

10. The vehicle management method according to any one of Claims 7 to 9, wherein a behavior of the other vehicle (302, 303) or the passerby (601) is predicted based on the environmental information, and the traveling information is generated based on a result of the prediction.

11. The vehicle management method according to any one of Claims 7 to 10, wherein
the sensor (501) detects an actual speed of the vehicle (301), and
when the actual speed exceeds the traveling speed of the traveling information, warning information is transmitted to the vehicle (301).

12. The vehicle management method according to any one of Claims 7 to 11, wherein a warning is issued to a driver of the other vehicle or the passerby in accordance with the traveling information.

13. A computer to perform the vehicle management method according to any one of Claims 7 to 12.
